# EUROPÄISCHE PATENTANMELDUNG

(11) **EP 2 033 825 A1**
(43) Veröffentlichungstag der Anmeldung: **11.03.2009**
(21) Anmeldenummer: 08015257.2
(22) Anmeldetag: 29.08.2008
(51) Int. Cl.: B60J 7/12

(54) **Cabriolet-Fahrzeug mit einem einen Dachbezug aufweisenden Dach**

(30) Priorität: 06.09.2007 DE 102007042302
(71) Anmelder: Wilhelm Karmann GmbH, 49084 Osnabrück (DE)
(72) Erfinder: Hilbk, Holger, 49201 Dissen (DE)

(57) **Zusammenfassung**

Ein Cabriolet-Fahrzeug (1) mit einem beweglichen Dach (2), an dessen seitlichen Rändern jeweils mehrere bei geschlossenem Dach (2) hintereinander folgende und zumindest teilweise einen Dachbezug spannende und längs verlaufende Rahmenteile (8;9;10) angeordnet sind, die von einem weiter innen liegenden Gestänge (11) unterstützt sind und beim Öffnen des Daches (2) in eine Packstellung gegeneinander einfalten, wird so ausgebildet, dass zumindest ein nach vorne und/oder hinten an einen folgenden Rahmenteil (8;9a;9b;10) angrenzender eingefasster Rahmenteil (9a;9b) mit dem vor (8;9a) und/oder hinter ihm gelegenen folgenden Rahmenteil (10;9b) derart verbunden ist, dass der eingefasste (9a;9b) und der zumindest eine folgende Rahmenteil (8;9a;10;9b) über eine an dem eingefassten (9a;9b) und dem folgenden Rahmenteil (8;9a;9b;10) angelenkte Brücke (13) miteinander verbunden sind.

## Beschreibung

Die Erfindung betrifft ein Cabriolet-Fahrzeug mit einem beweglichen Dach, an dessen seitlichen Rändern jeweils mehrere bei geschlossenem Dach hintereinander folgende und zumindest teilweise einen Dachbezug spannende und längs verlaufende Rahmenteile angeordnet sind, nach dem Oberbegriff des Anspruchs 1.

Es ist bekannt, derartige Längsrahmenteile aneinander gelenkig anzubinden, um dadurch ihr Einfalten gegeneinander bei der Dachöffnung zu ermöglichen und ein kurzes Paket mit zumindest teilweise übereinander liegenden Rahmenteilen bilden zu können. Insbesondere am Übergang zwischen einem im wesentlichen horizontal über einem Insassenraum liegenden Rahmenteil und dem hintersten, auf diesen nach hinten folgenden Rahmenteil, der sich im wesentlichen von einer Fensterbrüstungslinie schräg aufwärts zur oberen Dachfläche erstreckt, besteht häufig die Gefahr, dass das verbindende Gelenk durch die Seitenscheibe sichtbar ist und in den Kopfraum ragt. Dies ist dadurch bedingt, dass die genannten Rahmenteile bei der Dachöffnung üblicherweise gegeneinander einfalten und somit ihren Winkel gegeneinander verkleinern. Bei Vermeidung einer derartigen Lage des Gelenks besteht andererseits die Gefahr, dass dieses Gelenk aus der Dachkontur so weit nach hinten herauslaufen müsste, dass diese Lage konstruktiv nicht zu realisieren ist. Bei der Verbindung eines direkt an den Windschutzscheibenrahmen anschließenden vorgeordneten Rahmenteils mit einem weiter dahinter liegenden Rahmenteil liegt das Gelenk hingegen häufig zu weit oben, so dass es sich durch den Dachbezug abzeichnen und diesen verschleißen kann.

Der Erfindung liegt das Problem zugrunde, bei einem gattungsgemäßen Cabriolet-Fahrzeug auch für schwierige räumliche Bewegungsbedingungen ein kollisionsfreies und räumlich enges Einfalten der seitlichen Rahmenteile gegeneinander zu ermöglichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 12 angegeben.

Erfindungsgemäß ist es ermöglicht, dass eine Einfaltbarkeit zwischen längs hintereinander liegenden Rahmenteilen des Dachbezugs bei Dachöffnung in eine Packstellung gegeneinander einfaltbar sind, ohne eine direkte gelenkige Anbindung aneinander zu benötigen. Die Schwierigkeit, aus räumlichen Gründen, ein Schwenkgelenk zwischen den Rahmenteilen nicht so geeignet platzieren zu können, wie es die Kinematik erfordern würde, ist damit gelöst.

Der so nach vorne und/oder hinten an einen folgenden Rahmenteilen angrenzende mittlerer Rahmenteil kann während des Einfaltens in bezüglich der Seitenansicht beliebige Ausrichtung zu dem folgenden Dachteil gelangen. Die angelenkte Brücke kann jeweils so dimensioniert sein, dass sie einen entsprechenden Abstand der gegeneinander eingefalteten Rahmenteile ermöglicht.

Mit der Anlenkung sowohl an dem mittleren als auch an dem folgenden Rahmenteil ist die Brücke in einem großen Winkel gegenüber beiden genannten Rahmenteilen schwenkbar und ermöglicht so eine hohe Flexibilität der Bewegung.

Wenn vorteilhaft die Brücke in Fahrzeugquerrichtung hinter dem mittleren und dem folgenden Rahmenteil gelegen sind, ist sie von außen nicht sichtbar und stört die Dachkontur, insbesondere den Bezugverlauf, nicht.

Besonders günstig verläuft die Brücke bei geschlossenem Dach zumindest bereichsweise oberhalb der von dieser verbundenen Rahmenteile, so dass die Kopffreiheit nicht verringert ist und die Linie der Rahmenteile zu den Seitenscheiben nicht gestört ist.

Für eine gute Stabilität und eine minimierte Einschränkung der Kopfraumbreite auch während der Dachbewegung umfasst die Brücke einen hochkant im Fahrzeug liegenden Lenker.

Zudem kann sie für eine hohe Stabilität und kostengünstige Fertigung einstückig ausgebildet sein.

Sofern die Brücke zumindest an einem Ende an einer fest mit dem äußeren Rahmenteil verbundenen und quer innen gelegenen Einlage angelenkt ist, kann die Anlenkung außerhalb der Kontur des vergleichsweise schmalen Rahmenteils an sich liegen. Dadurch ist die Flexibilität weiter vergrößert.

Wenn der zumindest eine mittlere Rahmenteil in geschlossener Dachstellung an seiner vorderen und hinteren Stirnfläche in fluchtendem Kontakt zu den ihn vorne und hinten einfassenden Rahmenteilen steht, ist trotz der verbesserten Möglichkeiten der Dachbewegung in der geschlossenen Dachposition genau so ein Kontakt zwischen den hintereinander liegenden Rahmenteilen ermöglicht, als wären diese direkt oder über eine fest mit ihnen verbundene Einlage aneinander gehalten.

Die Möglichkeiten der Dachbewegung sind weiter verbessert, wenn der mittlere Rahmenteil und der über die Brücke mit diesem verbundene folgende Rahmenteil bei der Dachöffnung um mehr als 70° gegeneinander einfaltbar sind und wenn der zumindest eine mittlere Rahmenteil ohne direkte Anbindung zum Dachbezug ausgebildet ist und der Abstand dieses Rahmenteils zum Dachbezug variabel ist.

Insbesondere kann durch die Erfindung der zumindest eine mittlere Rahmenteil sich während eines Teils der Dachöffnungsbewegung mit seinem vorderen und hinteren Ende mit einer Komponente in vertikaler Richtung von den einfassenden Rahmenteilen entfernen. Die Lage der Enden ist nicht mehr dadurch beschränkt, dass der Abstand zum nach vorne oder hinten folgenden Dachteil - oder zumindest zu einem jeweils verbindenden Gelenk - aufgrund der direkten Anbindung gleich bleiben müsste. Die Ausrichtung des zumindest einen mittleren Dachteils kann damit nahezu beliebig in den Raum gelegt werden.

Die im wesentlichen freie Ausrichtbarkeit und Einfädelbarkeit des mittleren Dachteils ist weiter dadurch unterstützbar, dass der zumindest eine mittlere Rahmenteil ohne direkte Anbindung zum Dachbezug ausgebildet ist und der Abstand dieses Rahmenteils zum Dachbezug variabel ist, zum Beispiel über elastische Schlaufen, Bänder oder dergleichen.

Das Dach kann an jedem seitlichen Rand genau drei seitliche Rahmenteile hintereinander umfassen und somit eine klassische Dachform für einen Zwei- oder Vier- bis Fünfsitzer aufweisen. Insbesondere kann der in Fahrtrichtung zweite Rahmenteil in zwei gegeneinander bewegliche kurze Teile geteilt sein, um dadurch die Länge des abgelegten Dachpakets zu verkürzen. Damit kann einer der beiden Teile, der dann auch nicht an den Dachbezug angebunden sein muss, aus seiner Funktion in der Kinematik herausgelöst werden. Dieser Rahmenteil muss dann nur bei geschlossenem Dach eine den Bezug spannende Funktion haben. Eine solche Lösung ist beispielsweise möglich, wenn der hintere von diesen beiden Teilen denjenigen Rahmenteil bildet, der an den dahinter folgenden über eine Gelenkbrücke angebunden ist. Dieser mittlere Rahmenteil kann dann eng in das abgelegte Dachgestänge eingefaltet werden.

Dabei ist eine konventionelle Faltung mit gewendeter Dachspitze oder auch eine sog. Z-Faltung möglich, bei der bei geöffnetem Dach das vordere, bei geschlossenem Dach mit einem Windschutzscheibenrahmen verbundene Dachende in gleichbleibender Orientierung abgelegt ist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische und nach vorne abgebrochene Seitenansicht eines erfindungsgemäßen Cabriolet- Fahrzeugs bei geschlossenem Dach, wobei der Dach- bezug der Übersichtlichkeit halber nicht einge- zeichnet ist,

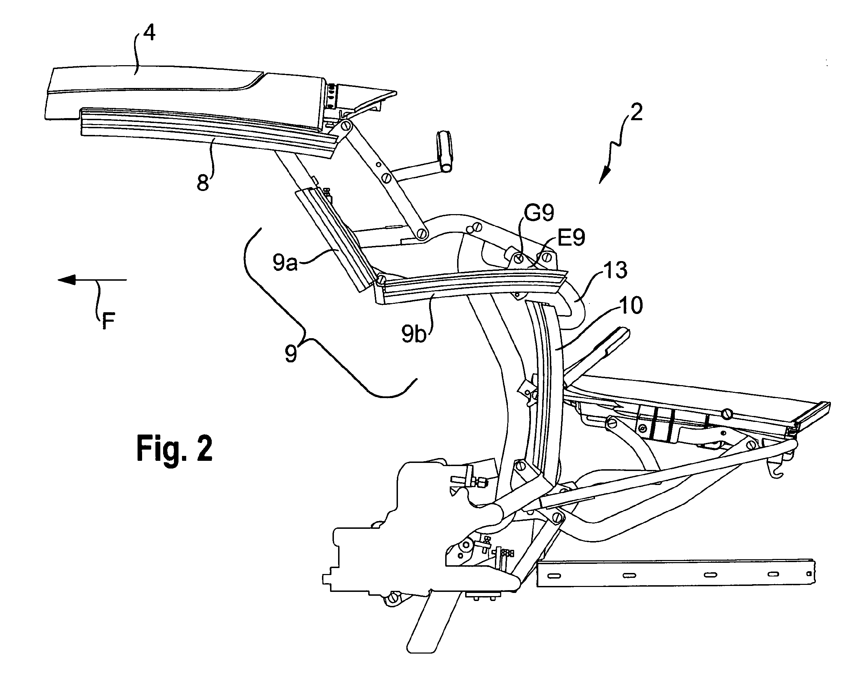

- Fig. 2: das herausgezeichnete Dach nach Figur 1 während seiner Öffnung,
- Fig. 3: das herausgezeichnete Dach nach Fig. 1 in ge- schlossener Stellung aus einer von schräg hinten gesehenen Perspektivansicht,
- Fig. 4: eine ähnliche Ansicht wie Fig. 3 während der Dachöffnung, ungefähr entsprechend der Dachstel- lung nach Fig. 2,
- Fig. 5: eine ähnliche Ansicht wie Fig. 4 weiter fort- schreitender Dachöffnung,
- Fig. 6: eine ähnliche Ansicht wie Fig. 5 während der End- phase der Dachöffnung kurz vor Erreichen seiner voll geöffneten Stellung,
- Fig. 7: eine ähnliche Ansicht wie Fig. 6 bei vollständig geöffnetem Dach,
- Fig. 8: eine ähnliche Darstellung wie Fig. 3, jedoch aus einer leicht gedrehten Perspektive mit einer mehr in Fahrzeuglängsrichtung weisenden Blickrichtung,
- Fig. 9: eine ähnliche Darstellung wie Fig. 8, jedoch nach Entfernen des bezüglich der Fahrtrichtung hinte- ren Teils des in sicht geteilten mittleren Rah- menteils,
- Fig. 10: eine ähnliche Darstellung wie Fig. 3, jedoch aus einer leicht gedrehten Perspektive mit einer mehr in Fahrzeuglängsrichtung weisenden Blickrichtung
- Fig. 11: eine ähnliche Darstellung wie Fig. 10, jedoch nach Entfernen des bezüglich der Fahrtrichtung hinteren Teils des in sich geteilten mittleren Rahmenteils,
- Fig. 12: eine vom Fahrzeuginsassenraum nach außen gesehene Seitenansicht des Daches in Stellung nach Fig. 10,
- Fig. 13: eine ähnliche Ansicht wie Fig. 12, jedoch in mo- difizierter Dachausbildung nach Fig. 11.

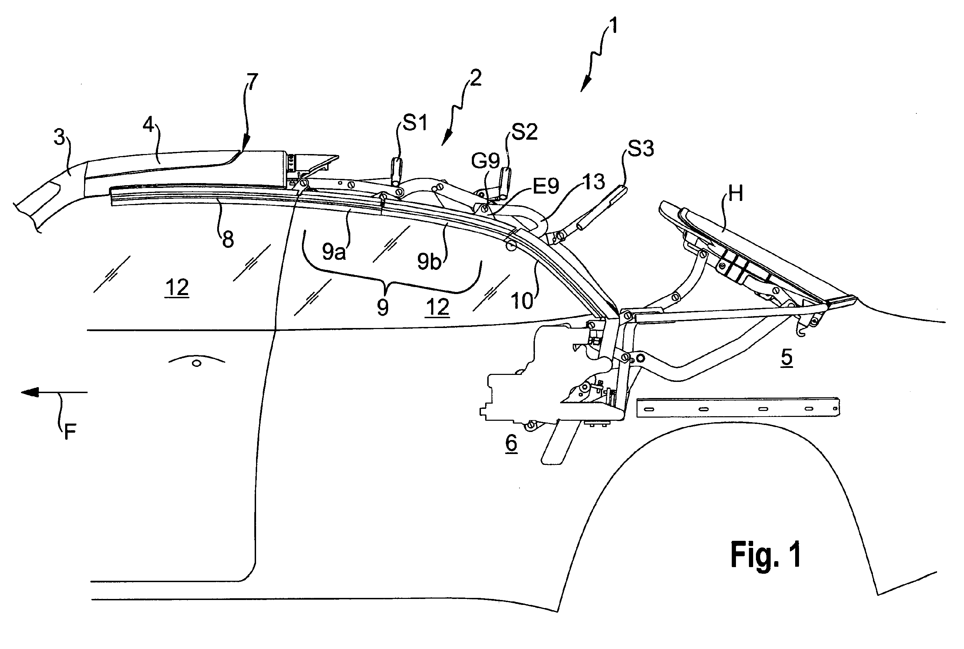

Das erfindungsgemäße Cabriolet-Fahrzeug 1 kann, wie in Figur 1 angedeutet, ein mit zumindest einer Rückbank versehenes vier- oder mehrsitziges Fahrzeug sein. Auch - nicht gezeichnet - ein Zweisitzer ist alternativ möglich.

Das insgesamt bewegliche und in geschlossener Stellung mittelbar oder unmittelbar an einen Windschutzscheibenrahmen 3 angrenzende Dach 2 bildet ein insgesamt mit einem gemeinsamen Bezug (hier selbst nicht dargestellt) überzogenes sog. Soft-Top aus. Hier ist ein zusätzlicher transparenter Schiebedachteil 4 im vorderen Dachbereich vorgesehen. Dessen in Draufsicht u-förmige Einfassung ist ebenfalls von Bezug überzogen. Die Ausbildung eines Schiebedachteils ist jedoch nicht zwingend. Das Dach 2 ist zu seiner Öffnung insgesamt nach hinten auffaltbar. Dadurch kann es im hinteren Fahrzeugbereich in einem Aufnahmeraum 5 abgelegt werden. Dieser kann durch ein karosserieseitiges Deckelteil abdeckbar sein.

Die Dachbewegung zwischen seiner Öffnungs- und Schließstellung ist manuell oder voll- oder teilautomatisch möglich.

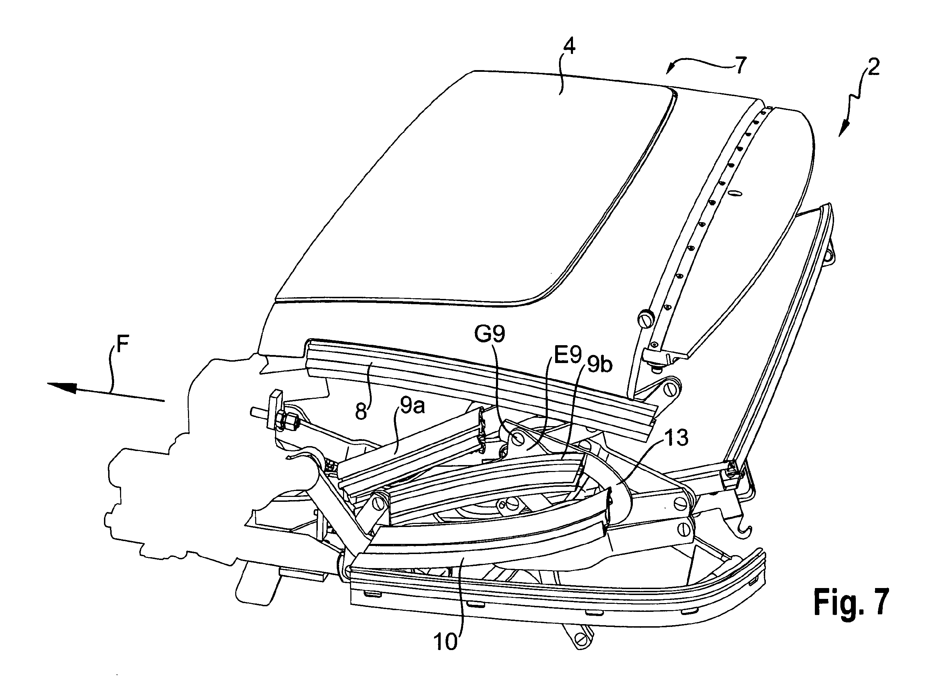

In den hier dargestellten Ausführungsbeispielen ist das Dach 2 über eine sog. Z-Faltung in der Fahrzeugkarosserie 6 ablegbar, wobei das im geschlossenen Zustand (Fig. 1) mit dem Windschutzscheibenrahmen 3 verbundene vorderste Dachende seine Orientierung im abgelegten zustand (Fig. 7) beibehält, also mit seiner Außenseite 7 auch in abgelegter Packstellung des Daches 2 nach oben weist. Diese Außenseite kann auch selbst den von außen und oben sichtbaren Abschluss des abgelegten Daches 2 ohne weitere Verkleidungen bilden.

Das Dach 2 umfasst an seinen bezüglich der Fahrzeugquerrichtung $seitlichen Rändern jeweils mehrere bei geschlossenem Dach 2 hintereinander folgende und zumindest teilweise den Dachbezug spannende und längs verlaufende Rahmenteile 8;9;10, von denen der Rahmenteil 9 in zwei bei geschlossenem Dach 2 aufeinander folgende Teilabschnitte 9a, 9b geteilt ist. Diese werde gemäß der Nomenklatur der Anmeldung auch selbst als Rahmenteile bezeichnet.

Alle Rahmenteile 8, 9a, 9b, 10 sind über ein weiter innen liegendes Gestänge 11 unterstützt und falten beim Öffnen des Daches 2 in eine mehr oder weniger übereinander liegende Packstellung nach Fig. 7 ein. Dadurch ergibt sich ein kurzes Dachpaket im Aufnahmeraum 5. Das Gestänge 11 ist an einem in der Karosserie 6 liegenden Hauptlager beweglich gehalten; die Rahmenteile 8, 9, 10 sind ihrerseits von dem Gestänge 11 gehalten.

Wie weiter unten noch deutlich wird, sind für die Kinematik des hier gezeigten Daches nur die drei Rahmenteile 8, 9a, 10 erforderlich. Der hintere Teilabschnitt 9b des mittleren Rahmenteils 9 dient nur bei geschlossenem Dach 2 zum Erreichen einer durchgehenden, geschlossenen Seitenlinie mit Abdichtung zu den seitlichen Scheiben 12.

Das in der Zeichnung dargestellte Dach 2 umfasst zudem mehrere den Dachbezug untergreifende Querspriegel S1, S2, S3 sowie eine Heckscheibe H.

Die Rahmenteile 9;9a;9b sind von dem bezüglich der Fahrtrichtung F vordersten 8 und dem hintersten Rahmenteil 10 eingefasst.

Erfindungsgemäß ist ein Rahmenteil 8, 9, 10 - gemäß der Zeichnung der von dem hinteren Teilabschnitt 9b des Rahmenteils 9 gebildete Rahmenteil - mit dem hinter ihm gelegenen folgenden Rahmenteil 10 derart verbunden, dass dieser eingefasste Rahmenteil 9b und der zumindest eine folgende Rahmenteil 10 über eine an dem eingefassten 9b und dem folgenden Rahmenteil 10 angelenkte Brücke 13 miteinander verbunden sind.

Alternativ oder zusätzlich wäre auch eine Anbindung über eine Gelenkbrücke zu einem weiter vorne gelegenen Rahmenteil 8, 9a möglich, ebenso eine solche Verbindung zwischen einem anderen eingefassten Rahmenteil 9a und dem nach vorne 8 oder nach hinten folgenden weiteren Rahmenteil 9b.

Die hier bumerangförmige Brücke 13 ist in Fahrzeugquerrichtung hinter dem eingefassten 9b und dem folgenden Rahmenteil 10 gelegen und dadurch von quer außen nicht sichtbar oder unter dem Bezug ertastbar.

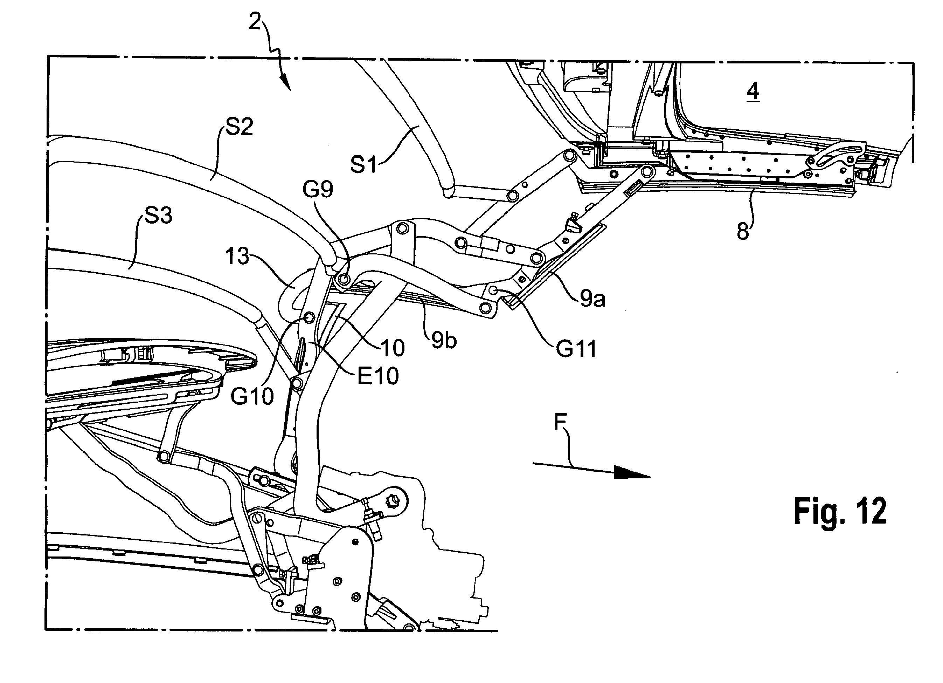

Wie zum Beispiel in Fig. 12 sichtbar ist, ist die Brücke 13 einenends an der sog. Einlage E9, zum Beispiel einem hochkant gelegenen Flacheisen, des Rahmenteils 9b und anderenends an der Einlage E10 des Rahmenteils 10 über die Gelenke G9 und G10 angebunden. Die jeweilige Einlage E9 bzw. E10 liegt quer innen an dem äußeren Rahmenteil 9b bzw. 10 und kann aus dessen äußerer Längskontur herausragen. Die Einlage E9 bzw. E10 ist jedoch fest mit dem äußeren Rahmenteil 9b, 10 verbunden und bildet somit in der üblichen Nomenklatur einen Bestandteil des jeweiligen Rahmenteils 9b, 10 aus. Durch die Anbindung an die jeweilige Einlage kann die Brücke 13 in optimalem Verlauf angeordnet werden.

So ist, wie in Fig. 1 sichtbar ist, die Brücke 13 bei geschlossenem Dach 2 zumindest bereichsweise oberhalb der von dieser verbundenen Rahmenteile 9b, 10 gelegen und kann trotzdem weit unterhalb der Ebene des Bezugs verbleiben. Dessen Verlauf wird damit nicht gestört, eine Reibung zwischen der Gelenkbrücke 13 und dem Bezug ist auch beim Einfalten des Daches 2 vermieden. Dadurch, dass die Brücke "obenrum" läuft, ist ein Drehpunkt zwischen den Rahmenteilen 9b und 10 zuverlässig aus dem Sichtbereich der Seitenscheiben 12 - und damit auch aus dem Kopfraum der Insassen - entfernt.

Für eine möglichst geringe Erstreckung in Fahrzeugquerrichtung und gleichzeitig eine hohe Stabilität beim Einfalten des Daches bei seinem Falten um die quer zum Fahrzeug gelegenen Horizontalachsen der Gelenke G9 und G10 umfasst die Brücke 13 einen hochkant im Fahrzeug liegenden Lenker, der beispielsweise fertigungstechnisch einfach einstückig ausgebildet sein kann.

Alle Rahmenteile 8, 9a, 9b, 10 stehen in geschlossener Dachstellung fluchtend und haben mit ihren Stirnseiten Kontakt zueinander. Der eingefasste Rahmenteil 9b grenzt dabei mit seiner vorderen Stirnfläche an den Rahmenteil 9a und mit seiner hinteren Stirnfläche an den hintersten Rahmenteil 10 an.

Dabei hat der eingefasste Rahmenteil 9b hier keine direkte Anbindung zum Dachbezug. Der Abstand dieses Rahmenteils 9b ist somit variabel, beim Einfalten des Daches 2 kann dieser Rahmenteil weit aus der Linie der weiteren Rahmenteile 8, 9a, 10 herauslaufen. Die Rahmenteile 8, 10 weisen eine direkte Bezuganbindung auf, der Rahmenteil 9a kann etwa über Schlaufen oder ähnliche längenveränderliche Halterungen mit dem Bezug verbunden sein.

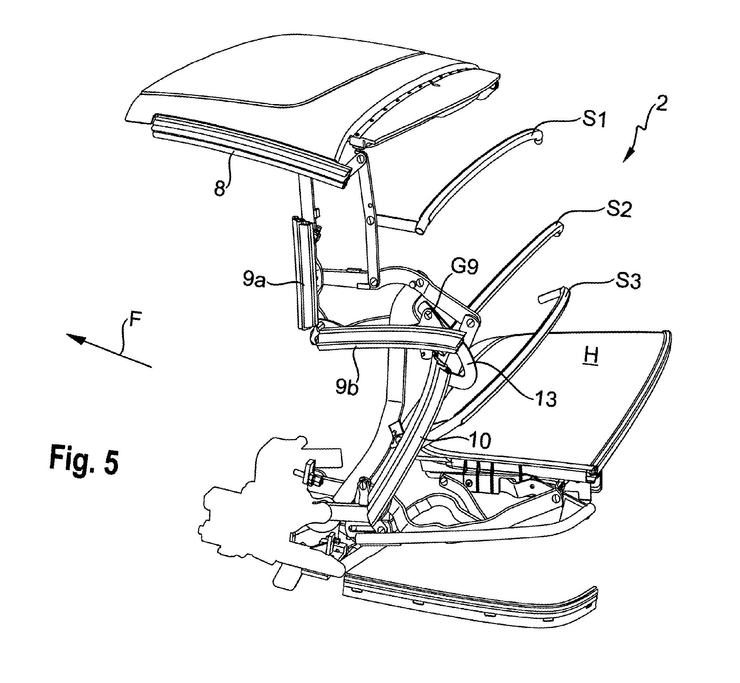

So kann der eingefasste Rahmenteil 9b während der Öffnung zunächst gegen den hinteren Rahmenteil 10 nach hinten laufen (Fig. 5) und dann oberhalb von diesem stehen, im weiteren kann dann eine enge Einfaltung dieser Rahmenteile 9b, 10 gegeneinander erfolgen (Fig. 7), typischerweise um mehr als 70° bis etwa 90°. Der Rahmenteil 9b kann sich daher von dem weiteren Rahmenteil 10 während der Bewegung zunächst entfernen und sich dann wieder an ihn annähern. Insgesamt ist die Bewegung des Rahmenteils 9b somit aus Translation und Rotation überlagert, wobei je nach Formgebung der Gelenkbrücke 13 die Bewegung ohne Über- oder Unterbestimmung exakt voreingestellt werden kann.

Durch die Brücke 13 sind daher Bewegungen zwischen den Rahmenteilen 9b, 10 möglich, die weit über ein bloßes Schwenken, wie dies mit einer üblichen Gelenkverbindung möglich wären, hinausgehen.

Da der Rahmenteil 9b gegenüber dem hinteren Rahmenteil 10 in Querrichtung weiter innen gelegen sein kann, ist in Packstellung des abgelegten Daches nicht nur eine vertikale, sondern auch eine horizontale Überlappung zwischen diesen Rahmenteilen 9b, 10 möglich.

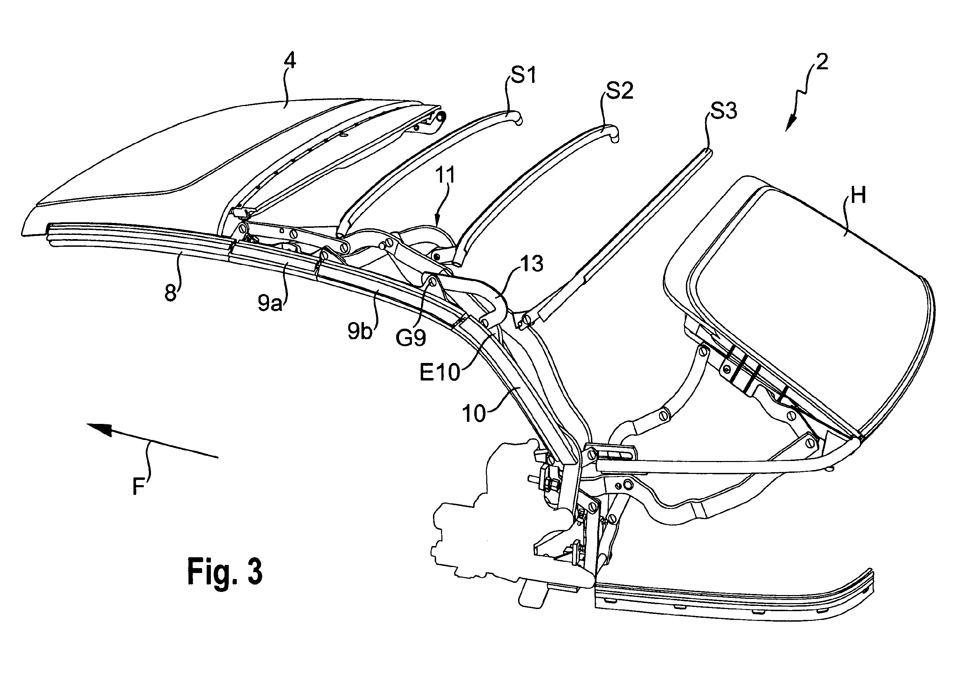

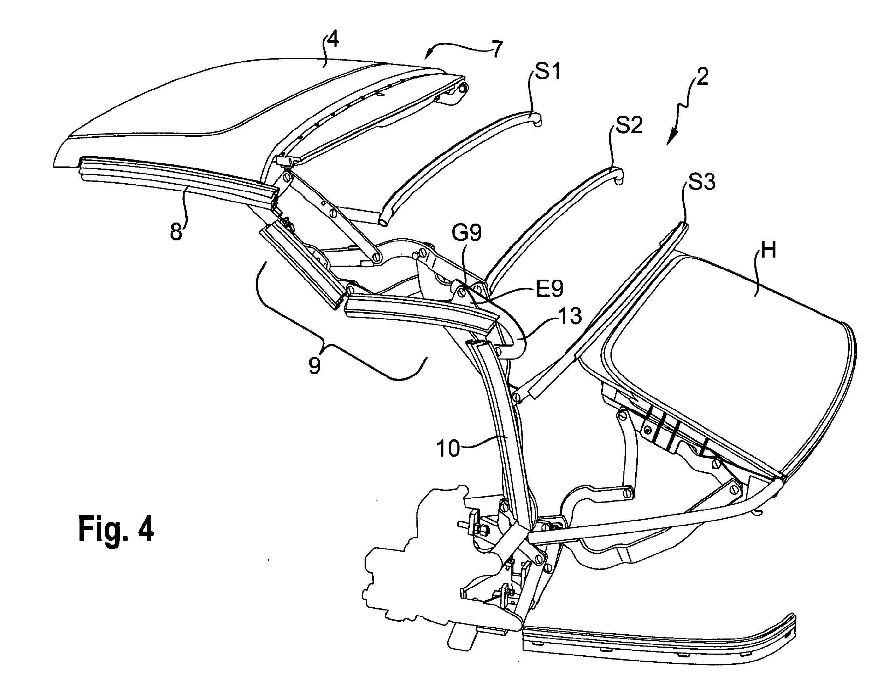

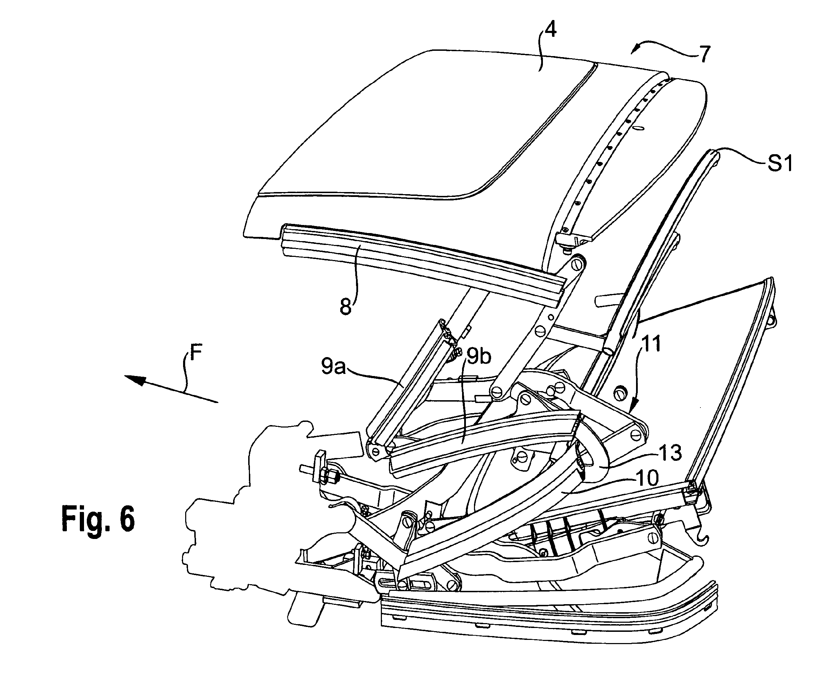

Ein vollständiger Öffnungsablauf des Daches 2 ist in den Figuren 3 bis 7 dargestellt.

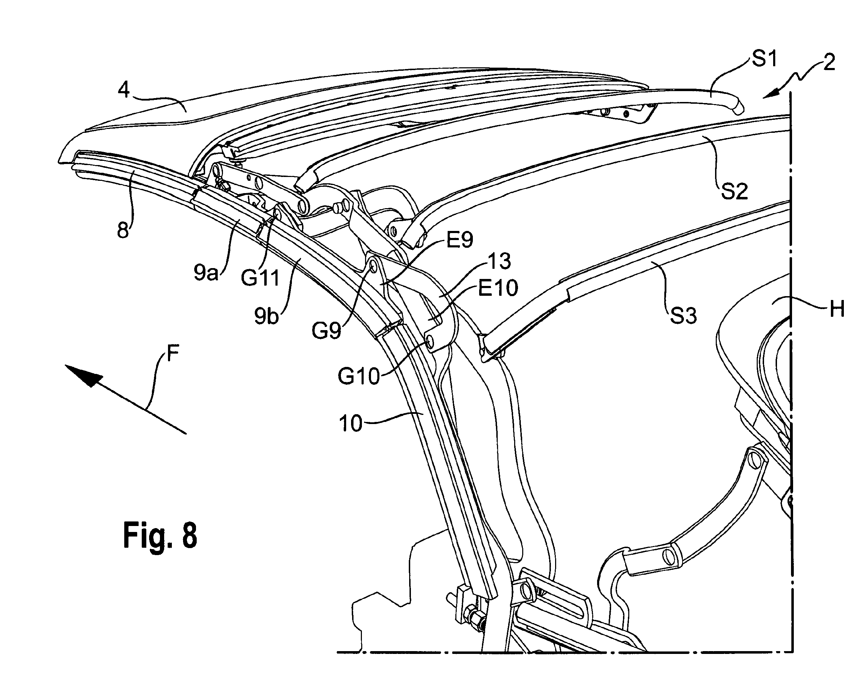

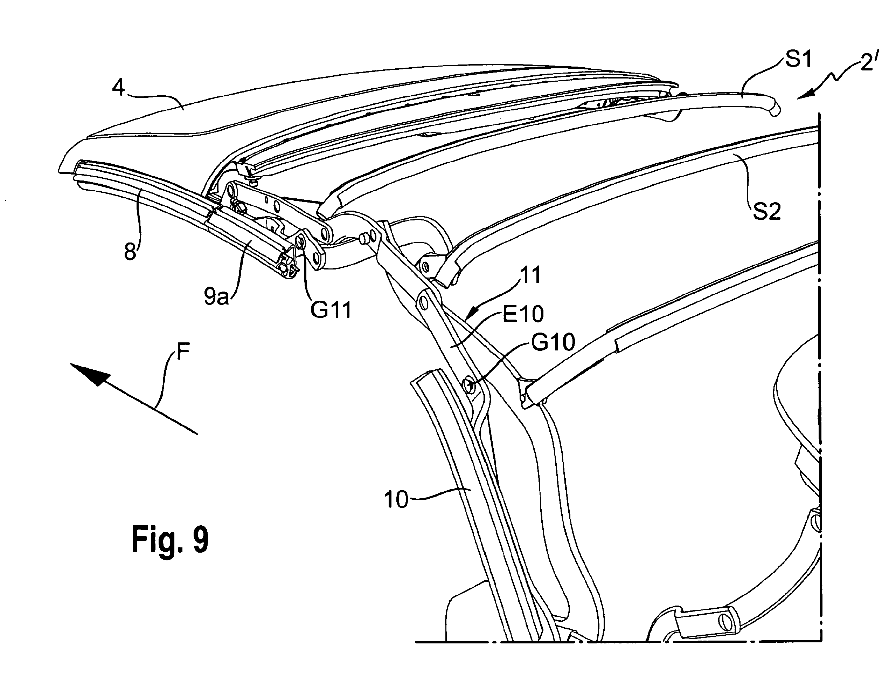

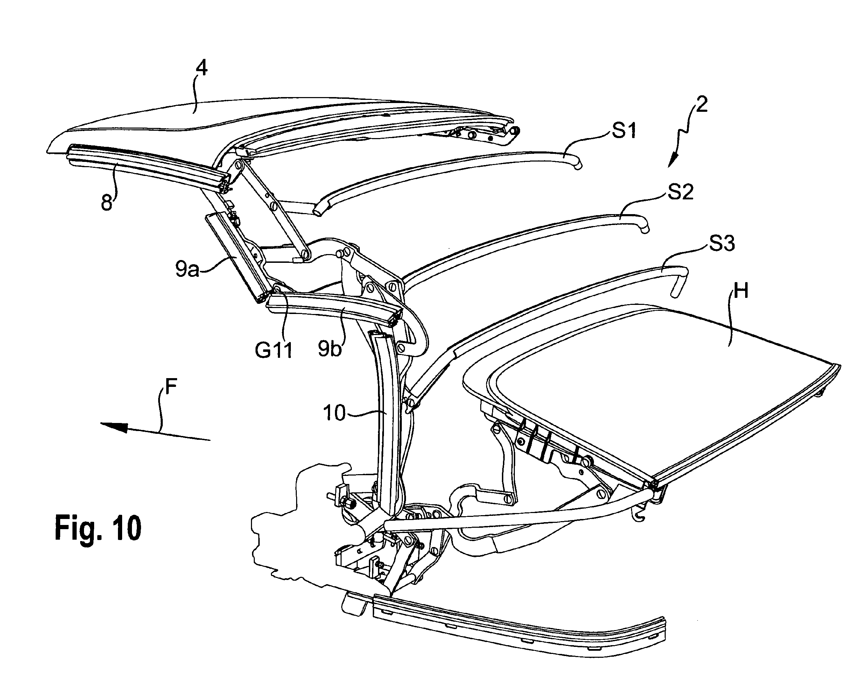

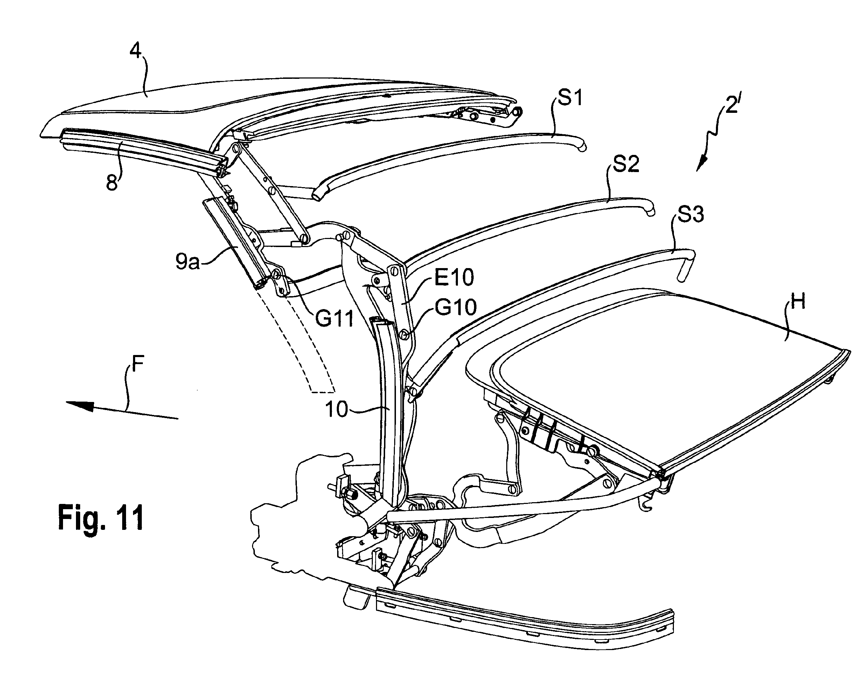

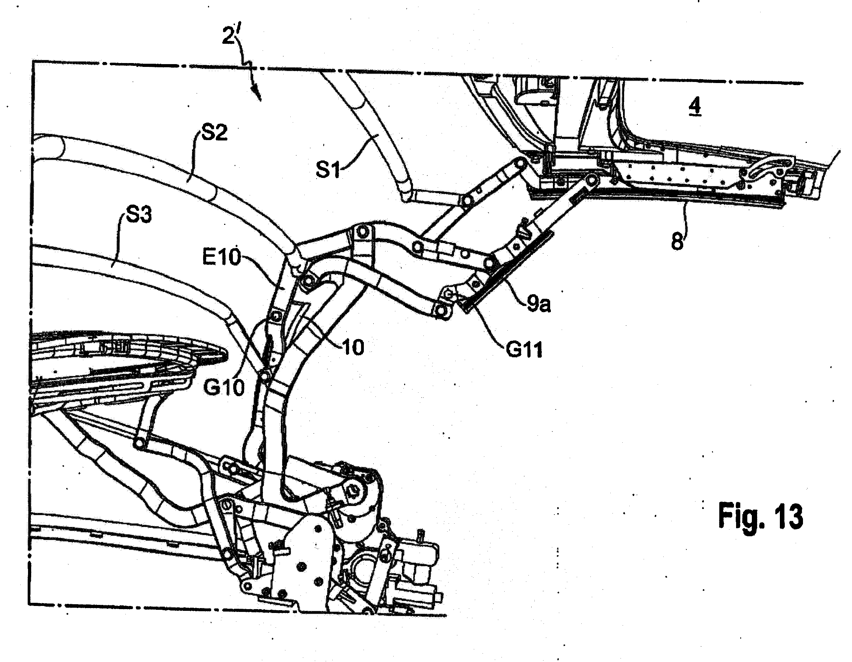

In den Figuren 8 bis 13 ist jeweils paarweise dargestellt, dass das Dach 2 an sich auch ohne den Rahmenteil 9b seine Faltungskinematik ausführen könnte. Dieser Rahmenteil ist mitsamt der Gelenkbrücke in Fig. 9 (Gegenüberstellung zu Fig. 8), Fig. 11 (Gegenüberstellung zu Fig. 10) und Fig. 13 (Gegenüberstellung zu Fig. 12) jeweils weggelassen. In Fig. 11 ist zusätzlich gestrichelt angedeutet, dass der vordere Teilabschnitt 9a wie bei einem üblichen Dach mit drei seitlichen Rahmenteilen auch einstückig bis zum hinteren Rahmenteil 10 durchgezogen sein könnte. Dies wäre allerdings gegenüber der Erfindung mit erheblichen Packagenachteilen verbunden. Wie oben beschrieben, ist der hintere Teilabschnitt 9b nur bei geschlossenem Dach funktional und ästhetisch erforderlich.

Das hier gezeichnete Dach 2 stellt daher seiner Funktion nach ein Dach mit an jedem seitlichen Rand drei seitlichen Rahmenteilen 8, 9, 10 hintereinander dar, nur hier mit der Ergänzung, dass der in Fahrtrichtung zweite Rahmenteil 9 in zwei gegeneinander bewegliche Teile 9a, 9b geteilt ist und der hintere 9b von diesen beiden denjenigen eingefassten Rahmenteil bildet, der an den dahinter folgenden 10 über die Gelenkbrücke 13 angebunden ist und daher die besondere Bewegungsmöglichkeit gegenüber diesem erfährt.

Der Zusatzaufwand ist minimiert, da gegenüber einem Dach 2' mit drei Rahmenteilen 8, 9, 10, wie dies in den Figuren 9, 11 und 13 angedeutet ist, nur in der Einlage E10 zusätzlich mit dem Gelenk G10 versehen werden, um daran die Gelenkbrücke 13 mit ihrem hinteren Ende beweglich halten zu können. Dann kann der Rahmenteil 9b mit der Einlage E9 und dem daran vorgesehenen Gelenk G9 an die Gelenkbrücke 13 angehängt werden und am vorderen Ende über das Gelenk G11 mit der Einlage des Rahmenteils 9a verbunden werden. Dieses Gelenk G11 kann ein reines Schwenkgelenk mit nur einem Freiheitsgrad sein.

Der zusätzlich eingefügte Rahmenteil 9b ist damit in seiner Bewegung weder unter- noch überbestimmt. über das Gelenk G11 und die Brücke 13 ist somit sichergestellt, dass der zumindest eine eingefasste Rahmenteil 9b in geschlossener Dachstellung an seiner vorderen und hinteren Stirnfläche in fluchtendem Kontakt zu den ihn vorne und hinten einfassenden Rahmenteilen 9a, 10 steht.

Durch die nahezu freie Ausrichtbarkeit und Positionierbarkeit des eingefassten Rahmenteils 9b sind die Möglichkeiten, das Dach 2 raumsparend abzulegen, ohne dass die Positionierung von Rahmenteile 8;9;10 verbindenden Schwenkgelenken Probleme bereiten würde, erheblich verbessert.

## Patentansprüche

1. Cabriolet-Fahrzeug (1) mit einem beweglichen Dach (2), an dessen seitlichen Rändern jeweils mehrere bei geschlossenem Dach (2) hintereinander folgende und zumindest teilweise einen Dachbezug spannende und längs verlaufende Rahmenteile (8;9;10) angeordnet sind, die von einem weiter innen liegenden Gestänge (11) unterstützt sind und beim Öffnen des Daches (2) in eine Packstellung gegeneinander einfalten,
**dadurch gekennzeichnet,**
**dass** zumindest ein nach vorne und/oder hinten an einen folgenden Rahmenteil (8;9a;9b;10) angrenzender eingefasster Rahmenteil (9a;9b) mit dem vor (8;9a) und/oder hinter ihm gelegenen folgenden Rahmenteil (10;9b) derart verbunden ist, dass der eingefasste (9a;9b) und der zumindest eine folgende Rahmenteil (8;9a;10;9b) über eine an dem eingefassten (9a;9b) und dem folgenden Rahmenteil (8;9a;9b;10) angelenkte Brücke (13) miteinander verbunden sind.

2. Cabriolet-Fahrzeug (1) nach Anspruch 1,
**dadurch gekennzeichnet,**
**dass** die Brücke (13) bezüglich der Fahrzeugquerrichtung hinter dem eingefassten (9a;9b) sowie hinter dem folgenden Rahmenteil (8,9a;10,9b) gelegen sind.

3. Cabriolet-Fahrzeug (1) nach einem der Ansprüche 1 oder 2,
**dadurch gekennzeichnet,**
**dass** die Brücke (13) bei geschlossenem Dach (2) zumindest bereichsweise oberhalb der von dieser verbundenen Rahmenteile (9b;10) gelegen ist.

4. Cabriolet-Fahrzeug (1) nach einem der Ansprüche 1 bis 3,
**dadurch gekennzeichnet,**
**dass** die Brücke (13) einen hochkant im Fahrzeug (1) liegenden Lenker umfasst.

5. Cabriolet-Fahrzeug (1) nach einem der Ansprüche 1 bis 4,
**dadurch gekennzeichnet,**
**dass** die Brücke (13) einstückig ausgebildet ist.

6. Cabriolet-Fahrzeug (1) nach einem der Ansprüche 1 bis 5,
**dadurch gekennzeichnet,**
**dass** die Brücke (13) zumindest an einem Ende an einer fest mit dem äußeren Rahmenteil (9b;10) verbundenen und quer innen gelegenen Einlage (E9;E10)angelenkt (G9;G10) ist.

7. Cabriolet-Fahrzeug (1) nach einem der Ansprüche 1 bis 6,
**dadurch gekennzeichnet,**
**dass** der zumindest eine eingefasste Rahmenteil (9b) in geschlossener Dachstellung an seiner vorderen und hinteren Stirnfläche in fluchtendem Kontakt zu den vorne und hinten folgenden Rahmenteilen (9a;10) steht.

8. Cabriolet-Fahrzeug (1) nach einem der Ansprüche 1 bis 7,
**dadurch gekennzeichnet,**
**dass** der eingefasste Rahmenteil (9b) und der über die Brücke (13) mit diesem verbundene folgende Rahmenteil (10) bei der Dachöffnung um mehr als 70° gegeneinander einfaltbar sind.

9. Cabriolet-Fahrzeug (1) nach einem der Ansprüche 1 bis 8,
**dadurch gekennzeichnet,**
**dass** der zumindest eine eingefasste Rahmenteil (9b) ohne direkte Anbindung zum Dachbezug ausgebildet ist und der Abstand dieses Rahmenteils (9b) zum Dachbezug variabel ist.

10. Cabriolet-Fahrzeug (1) nach einem der Ansprüche 1 bis 9,
**dadurch gekennzeichnet,**
**dass** der zumindest eine eingefasste Rahmenteil (9b) in geöffneter Dachstellung teilweise sowohl in vertikaler als auch in horizontaler Richtung überlappend zu dem nachgeordneten Rahmenteil (10) liegt.

11. Cabriolet-Fahrzeug (1) nach einem der Ansprüche 1 bis 10,
**dadurch gekennzeichnet,**
**dass** das Dach (2) an jedem seitlichen Rand drei seitliche Rahmenteile (8;9;10) hintereinander umfasst, von denen der in Fahrtrichtung zweite in zwei gegeneinander bewegliche Teilabschnitte (9a;9b) geteilt ist und der hintere (9b) von diesen beiden den eingefassten Rahmenteil bildet, der an den dahinter folgenden (10) über eine Gelenkbrücke (13) angebunden ist.

12. Cabriolet-Fahrzeug (1) nach einem der Ansprüche 1 bis 11,
**dadurch gekennzeichnet,**
**dass** bei geöffnetem Dach (2) das vordere, bei geschlossenem Dach (2) mit einem Windschutzscheibenrahmen (3) verbundene Dachende in gleichbleibender Orientierung abgelegt ist.
